# DEMANDE DE BREVET EUROPEEN

(11) **EP 4 014 750 A1**
(43) Date de publication de la demande: **22.06.2022**
(21) Numéro de dépôt: 21215551.9
(22) Date de dépôt: 17.12.2021
(51) Int. Cl.: A23K 10/30, A23K 40/25, A23K 50/00, A23K 50/42

(54) **CROQUETTES POUR ANIMAUX DE COMPAGNIE ET PROCÉDÉ DE PRÉPARATION DE CELLES-CI**

(30) Priorité: 17.12.2020 FR 2013522
(71) Demandeur: Tereos Starch & Sweeteners Europe, 77230 Moussy-le-Vieux (FR)
(72) Inventeur: BERGOUG, Hakim, 77230 Moussy-le-Vieux (FR); METZGER, Nicolas, 77230 Moussy-le-Vieux (FR)
(74) Mandataire: Icosa

(57) **Abrégé**

La présente invention concerne des croquettes pour animaux de compagnie comprenant un mélange de gluten de blé vital et de gluten de blé hydrolysé ainsi qu'un procédé de préparation de celles-ci.

## Description

### DOMAINE DE L'INVENTION

La présente invention concerne des croquettes pour animaux de compagnie comprenant un mélange de gluten de blé vital et de gluten de blé hydrolysé, ainsi qu'un procédé de préparation de celles-ci.

### ÉTAT DE LA TECHNIQUE

Ces dernières années, plusieurs protéines végétales ont été étudiées en vue de leur inclusion potentielle dans les aliments pour animaux de compagnie en remplacement des protéines animales. On peut citer notamment le soja, les pois chiches, la spiruline, les graines de chanvre, le fénugrec et les graines de courge. Le soja par exemple, qui a une teneur élevée en protéines et une composition en acides aminés similaire à celle de la viande, serait en fait moins "incomplet" qu'on ne le pensait au départ. De nombreuses recherches ont donc été menées sur la meilleure méthode de transformation pour une digestibilité maximale.

La digestibilité des protéines dépend de deux facteurs principaux : leur source et les processus par lesquels elles sont incorporées dans les aliments pour animaux de compagnie. Les protéines insuffisamment ou trop cuites ont une digestibilité réduite, mais lorsqu'elles sont correctement traitées, les protéines végétales peuvent être tout aussi bénéfiques pour l'animal de compagnie que les protéines animales.

En effet, l'isolât de soja, l'hydrolysat de soja, le gluten de maïs et le gluten de blé sont tous des sources purifiées de protéines végétales très hautement digestibles. Par exemple, il a été démontré que le gluten de blé est plus digestible (97-99%) que le bœuf (80-97%), ce qui signifie qu'il est mieux toléré par le tractus gastro-intestinal et est donc un ingrédient de choix, notamment pour les animaux atteints de maladies gastro-intestinales. En outre, l'utilisation de protéines végétales en remplacement des protéines animales présente d'autres avantages, notamment d'un point de vue environnemental - leur fabrication requiert moins de ressources que celle de protéines animales et elles limitent les émissions de gaz à effets de serre issues des troupeaux -, d'un point de vue des allergies - il n'existe pas ou peu d'intolérances ou d'allergies aux protéines végétales, et elles peuvent être sans gluten - , et du point de vue nutritionnel - elles peuvent être source de fibres, de vitamines et de minéraux en quantité plus élevée que les protéines animales -.

Dans une étude publiée en 2004 dans Animal Feed Science and Technology, Yamka et al ont conclu que des sources de protéines végétales représentent des alternatives avantageuses aux sources de protéines animales dans les aliments extrudés pour animaux de compagnie, la digestibilité des nutriments et la qualité des matières fécales étant similaires à celles d'un régime à base de viande.

Il va sans dire que tous les aliments pour animaux de compagnie doivent être formulés avec précision pour répondre aux besoins nutritionnels les plus exigeants des animaux de compagnies, qu'ils soient en bonne santé ou malades. Ils doivent être suffisamment savoureux pour garantir un apport adéquat de tous les nutriments et non seulement maintenir la santé au moment de la consommation, mais aussi après.

Les protéines végétales peuvent également être utilisées en combinaison avec des protéines animales pour obtenir un aliment ou une friandise très savoureuse et riche en protéines pour les chats et les chiens.

Nous connaissons par exemple les demandes WO2013074466 et WO2015095881 portant sur des croquettes enrobées constituées pour l'essentiel d'ingrédients protéiques d'origine végétale. Nous connaissons également les demandes WO2016035059 et WO2017153931 portant sur un substitut de protéine animale à durée de conservation prolongée à base de protéine végétale.

En ce qui concerne la production d'aliments secs pour animaux de compagnie, la cuisson par extrusion est couramment utilisée. En tant que processus impliquant un traitement thermique, la cuisson par extrusion peut avoir des effets à la fois bénéfiques et néfastes sur la qualité nutritionnelle du produit. Les effets souhaitables de l'extrusion comprennent l'augmentation de l'appétence, la destruction de nutriments indésirables et l'amélioration de la digestibilité. Les effets indésirables de l'extrusion comprennent la réduction de la qualité des protéines en raison, par exemple, de la réaction de Maillard, et la perte de vitamines thermolabiles.

Un autre inconvénient dans la fabrication de croquettes pour animaux de compagnie est que la qualité des protéines végétales utilisées peut ne pas être stable en fonction de l'origine géographique et/ou de la récolte et donc ceci peut influer sur la qualité du produit final.

A la connaissance du Demandeur, aucun ingrédient ou association d'ingrédients n'a ainsi été décrit en vue d'améliorer ou de mieux contrôler les caractéristiques des croquettes pour animaux de compagnie tels que les chiens ou les chats, comme la dureté et la durabilité, et ce quelle que soit l'origine et la récolte des protéines végétales utilisées, ainsi que l'énergie nécessaire à sa mise en œuvre tout en conservant les qualités nutritionnelles du produit.

Nous connaissons par exemple les demandes WO2008011543 et WO200507749 portant sur des formulations de résine ayant une durée de conservation améliorée, comprenant un agent stabilisant, tel que des protéines hydrolysées, des dérivés de protéines hydrolysées et des complexes protéines hydrolysées/dérivés de protéines hydrolysées-émulsifiants.

Il existe donc un besoin pour une formulation de croquettes pour animaux de compagnie tels que les chiens ou les chats, présentant des caractéristiques satisfaisantes telles que la dureté et la durabilité, et ce quelles que soient l'origine et la récolte des protéines végétales utilisées. Il existe en outre un besoin pour un procédé de fabrication de telles croquettes permettant un bon contrôle de ces propriétés, et un meilleur contrôle de l'énergie mécanique spécifique nécessaire à sa mise en œuvre tout en conservant les qualités nutritionnelles du produit.

Ainsi, la présente invention vise à fournir des croquettes pour animaux de compagnie, en particulier des chiens ou chats, ainsi qu'un procédé de fabrication de celles-ci. Lesdites croquettes incorporent dans leur composition un mélange de gluten de blé vital et de gluten de blé hydrolysé, permettant un meilleur contrôle des caractéristiques des croquettes et de l'énergie nécessaire à leur fabrication.

### RÉSUMÉ

La présente invention concerne des croquettes possédant un taux d'expansion compris entre 1,5 et 1,7, de préférence entre 1,6 et 1,65, pour animaux mammifères de compagnie comprenant un mélange de gluten de blé vital et de gluten de blé hydrolysé, le mélange comprenant de 5% à 15%, en poids par rapport au poids total du mélange, de gluten de blé hydrolysé, de préférence de 5% à 10% et de la pulpe de betterave.

Selon un mode de réalisation, le mélange de gluten de blé vital et de gluten de blé hydrolysé représente de 5% à 20 % en poids par rapport au poids total des croquettes.

Selon un mode de réalisation, les croquettes selon l'invention comprennent en outre au moins un ingrédient choisi parmi : de la farine de volaille, du blé, de la farine de blé, du maïs, de la farine de gluten de maïs, du sel, du gras de lard et de l'huile de soja.

Selon un mode de réalisation, les croquettes selon l'invention comprennent en poids par rapport au poids total des croquettes :
- de 5 à 20% d'un mélange de gluten de blé vital et de gluten de blé hydrolysé, comprenant de 5% à 15%, en poids par rapport au poids total du mélange, de gluten de blé hydrolysé, de préférence de 5% à 10% ;
- de 10 à 30% de farine de volaille ;
- de 5 à 25% de blé ;
- de 1 à 10% de farine de blé ;
- de 15 à 40% de maïs ;
- de 1 à 5% de pulpe de betterave ;
- de 1 à 10% de farine de gluten de maïs ;
- de 0,1 à 5% de sel ;
- de 1 à 10% de gras de lard ; et
- de 0,5 à 5% d'huile de soja.

Selon un mode de réalisation, lesdites croquettes sont des croquettes pour chien ou chat.

Selon un mode de réalisation, lesdites croquettes possèdent une dureté comprise entre 40 N et 120 N.

Selon un mode de réalisation, les croquettes possèdent un indice de durabilité compris entre 98 et 99,5.

Selon un mode de réalisation, les croquettes possèdent un taux de matière sèche compris entre 88% et 91%.

La présente invention concerne également, un procédé de préparation de croquettes possédant un taux d'expansion compris entre 1,5 et 1,7, de préférence entre 1,6 et 1,65, pour animaux mammifères de compagnie comprenant un mélange de gluten de blé vital et de gluten de blé hydrolysé, le mélange comprenant de 5% à 15%, en poids par rapport au poids total du mélange, de gluten de blé hydrolysé, de préférence de 5% à 10% et de la pulpe de betterave, ledit procédé comprenant les étapes suivantes :
a) broyage et/ou mélange de la pulpe de betterave avec un mélange de gluten de blé vital et de gluten de blé hydrolysé, ledit mélange comprenant de 5% à 15% de gluten de blé hydrolysé et optionnellement d'au moins un des ingrédients suivants : farine de volaille, blé, farine de blé, maïs, farine de gluten de maïs et sel ;
b) injection à flux contrôlé du mélange sec obtenu à l'étape a) par gravité dans un extrudeur (1^{er} fourreau) ;
c) injection contrôlée d'eau dans l'extrudeur (fourreau 2) jusqu'à une humidité totale comprise entre 20 et 35% dans l'extrudeur ;
d) extrusion de la pâte obtenue à l'étape c) ;
e) découpage du matériau extrudé obtenu à l'étape d) en croquettes ;
f) séchage des croquettes jusqu'à une teneur en humidité de 9 à 12% ;
g) refroidissement des croquettes jusqu'à température ambiante.

Selon un mode de réalisation, le procédé de la présente invention comprend en outre une étape d'enrobage des croquettes avec du gras de lard et de l'huile de soja.

### DÉFINITIONS

Dans la présente invention, les termes ci-dessous sont définis de la manière suivante :
Le terme « **croquettes pour animaux de compagnie** » concerne une composition alimentaire façonnée en boulette allongée, spécialement élaborée pour la nutrition des animaux de compagnie, afin de répondre à leurs besoins en nutriments spécifiques. Au sens de l'invention, il est entendu par animaux de compagnie des mammifères et particulièrement des carnivores domestiques tels les chiens ou les chats ; des rongeurs tels que les rats, les cochons d'Inde, les hamsters, les chinchillas, les gerbilles ou les souris ; ou les lagomorphes tels que les lapins.

Le terme **"environ"** placé devant un chiffre ou un nombre, signifie plus ou moins 10% de la valeur nominale de ce chiffre ou ce nombre, de préférence plus ou moins 5%, en particulier plus ou moins 1%.

Le terme **"gluten"** concerne les protéines de stockage contenues dans les grains de nombreuses céréales telles que le blé, l'avoine ou l'orge, qui permettent de stocker des oligo-éléments ou des acides aminés nécessaires au développement de la jeune pousse. Le gluten comprend des protéines insolubles dans des solutions aqueuses, à savoir les gliadines et les gluténines. Hormis les protéines, le gluten comprend de l'amidon, des sucres réducteurs et des lipides.

Le terme **"gluten de blé vital"** ou **"VWG"** concerne une protéine de blé extraite lors de la fabrication d'amidon ou d'éthanol notamment. Il désigne des formes de gluten de blé séché n'ayant été soumises qu'à une dénaturation thermique minimale ou nulle lors du séchage et à partir de laquelle l'amidon et les composants solubles ont été éliminés par un procédé de lavage. Lors d'une reconstitution avec de l'eau, le gluten de blé vital présente des propriétés physiques (par exemple une élasticité) semblables à celles de gluten de blé humide fraîchement préparé. La poudre de gluten de blé vital possède typiquement un pourcentage de protéines, sur une base sèche, d'environ 80% ou plus (tel que mesuré selon la méthode AOAC 979,09 ; méthode Kjeldahl avec un facteur de conversion Nx6,25).

Le terme « **gluten de blé hydrolysé** » concerne une protéine soluble produite à partir de gluten de blé vital. La matière première subit un processus d'hydrolyse spécifique avec une enzyme de qualité alimentaire, qui passe ensuite par une étape de purification avant d'être séchée. Cette protéine est très concentrée, avec environ 80% de protéines brutes, 6% de matières grasses, 3% d'amidon et moins de 1% de fibres, ce qui lui confère une grande souplesse d'utilisation dans la formulation de régimes alimentaires pour diverses espèces animales.

Le terme **"dureté"** concerne la force nécessaire pour comprimer un aliment entre les molaires (Définie comme la force nécessaire pour atteindre une déformation donnée). La dureté est analysée par compression diamétrale à l'aide d'un duromètre.

Le terme **"durabilité"** concerne le pourcentage de la masse des croquettes survivant durant le transport et le stockage des croquettes par rapport à la masse totale des croquettes. La durabilité, ou PID (Pellets Durability Index) est analysée par un durabilimètre qui consiste à souffler de l'air à 70 mBars dans une cage emprisonnant les pellets. La durabilité correspond au % massique des pellets après 2 minutes de soufflage par rapport à la masse initiale.

Le terme « **taux d'expansion** » concerne le paramètre rendant compte des modifications des dimensions de l'extrudât en sortie de filière dans un procédé d'extrusion. L'expansion peut être transversale (radiale ou diamétrale), longitudinale et/ou volumique. L'expansion transversale correspond au rapport entre le rayon (ou diamètre) du produit extrudé et celui de la filière. L'expansion longitudinale correspond au rapport entre la vitesse linéaire de l'extrudât après expansion et la vitesse moyenne de la pâte dans la filière. L'expansion volumique correspond au rapport de la masse volumique du produit dans la filière sur celle de l'extrudât.

Le taux d'expansion est lié aux propriétés du gluten de blé qui peuvent être différentes en fonction des récoltes. Les propriétés du gluten de blé sont caractérisées chaque année ou à chaque récolte en déterminant notamment le rapport ténacité/extensibilité (P/L) indiquant le degré d'extensibilité du gluten de blé récolté. Un rapport < 0,5 indique un gluten de blé très extensible, alors qu'un rapport > 0,5 indique un gluten de blé rigide et difficile et donc peu extensible.

Le terme « **productivité** » concerne la capacité de production des croquettes selon l'invention à l'aide du procédé de la présente invention.

Le terme « **énergie mécanique spécifique** » ou « **EMS** » concerne l'intensité du traitement thermomécanique fourni au produit extrudé. Elle correspond au rapport de la puissance apportée au produit sur le débit de l'extrudeur. L'intensité du traitement thermomécanique fourni au produit extrudé varie en fonction du débit matière et de la vitesse de rotation des vis. Le calcul de l'EMS est effectué en utilisant la charge du moteur de l'extrudeur, la vitesse de la vis d'extrusion et le débit total pour fournir l'apport énergétique sur une base de masse unitaire.

Le terme « **comprendre** » et ses variations doivent être compris selon la présente invention comme n'excluant pas la présence d'autres étapes et/ou composants. Dans certains modes de réalisation, le terme comprendre peut être interprété comme « être essentiellement constitué de », voire « être constitué de ».

### DESCRIPTION DÉTAILLÉE

### Croquettes

La présente invention concerne des croquettes pour animaux de compagnie comprenant un mélange de gluten de blé vital et de protéine végétale hydrolysée.

Selon un mode de réalisation, les croquettes selon l'invention comprennent un mélange de gluten de blé vital et de protéine végétale hydrolysée, ledit mélange comprenant de 1% à 20%, en poids par rapport au poids total du mélange, de protéine végétale hydrolysée. Dans un mode de réalisation, le mélange comprend de 10% à 20% de protéine végétale hydrolysée. Dans un mode de réalisation préféré, le mélange comprend de 5% à 15% de protéine végétale hydrolysée Dans un mode de réalisation plus préféré, le mélange comprend de 5% à 10% de protéine végétale hydrolysée. Dans un mode de réalisation encore plus préféré, le mélange comprend 5%, 6%, 7%, 8%, 9% ou 10% de protéine végétale hydrolysée. Dans un mode de réalisation encore plus préféré, le mélange comprend environ 5% de protéine végétale hydrolysée.

Selon un mode de réalisation, le mélange de gluten de blé vital et de protéine végétale hydrolysée utilisé dans les croquettes selon l'invention représente de 5% à 20 % en poids par rapport au poids total des croquettes. Dans un mode de réalisation, le mélange de gluten de blé vital et de protéine végétale hydrolysée représente de 15% à 20 % en poids par rapport au poids total des croquettes. Dans un mode de réalisation préféré, le mélange de gluten de blé vital et de protéine végétale représente de 5% à 15 % en poids par rapport au poids total des croquettes. Dans un mode de réalisation plus préféré, le mélange de gluten de blé vital et de protéine végétale hydrolysée représente environ 5%, environ 6%, environ 7%, environ 8%, environ 9%, environ 10%, environ 11%, environ 12%, environ 13%, environ 14% ou environ 15% en poids par rapport au poids total des croquettes. Dans un mode de réalisation encore plus préféré, le mélange de gluten de blé vital et de protéine végétale hydrolysée représente environ 10% en poids par rapport au poids total des croquettes.

Selon un mode de réalisation, le gluten de blé vital utilisé dans les croquettes selon l'invention présente une teneur en protéines d'au moins 75% en poids par rapport au poids total de la matière sèche du gluten de blé vital. Plus préférentiellement, le gluten de blé vital est un produit commercialisé sous le nom AMYGLUTEN par l'entreprise TEREOS^{®}, encore plus préférentiellement il s'agit du produit commercialisé sous le nom de marque AMYGLUTEN 100 par l'entreprise TEREOS^{®}.

Selon un mode de réalisation, la protéine végétale hydrolysée utilisée dans les croquettes selon l'invention est choisie parmi les protéines de blé, les protéines de soja, les protéines de maïs, les protéines de pois, les protéines de pomme de terre, les protéines de lupin, les protéines de coton, les protéines de graines de lin, les protéines de tournesol et un quelconque mélange de celles-ci.

Dans un mode de réalisation préféré, la protéine végétale hydrolysée utilisée dans les croquettes selon l'invention est une protéine de blé hydrolysée. Dans un mode de réalisation encore plus préféré, la protéine végétale hydrolysée utilisée dans les croquettes selon l'invention est du gluten de blé hydrolysé. Plus préférentiellement, le gluten de blé hydrolysé est un produit commercialisé sous le nom SOLPRO par l'entreprise TEREOS^{®}, encore plus préférentiellement il s'agit du produit commercialisé sous le nom de marque SOLPRO 508 par l'entreprise TEREOS^{®}.

Selon un mode de réalisation, les croquettes selon l'invention comprennent en outre au moins un liant choisi parmi une matière première contenant de l'amidon telle que de la farine de blé, de la farine de pomme de terre, du riz, de la farine de riz, de la farine de pois, des haricots, de la farine de tapioca ou un mélange quelconque de ceux-ci. Dans un mode de réalisation préféré, le liant est de la farine de blé.

Selon un mode de réalisation, les croquettes selon l'invention comprennent en outre au moins une source de protéine animale choisie parmi de la farine de volaille, de la farine de poisson, de la farine d'os, de la farine de sang, de la farine de viande, de la farine de plume et un mélange quelconque de celles-ci. Dans un mode de réalisation préféré, la source de protéine animale est de la farine de volaille.

Selon un mode de réalisation, les croquettes selon l'invention comprennent en outre au moins une source de protéine végétale choisie parmi de la farine de gluten de maïs, de la farine de soja, de la farine de graine de tournesol, de la farine de graine de coton, de la farine de graine de lin et un mélange quelconque de celles-ci. Dans un mode de réalisation préféré, la source de protéine végétale est de la farine de gluten de maïs.

Selon un mode de réalisation, les croquettes selon l'invention comprennent en outre au moins une source de fibre telle que de la pulpe de betterave.

Selon un mode de réalisation, les croquettes selon l'invention comprennent en outre au moins une source de lipide choisie parmi de l'huile végétale ou animale telle que l'huile de soja, l'huile de maïs, l'huile de palme, l'huile de ricin ou l'huile de poisson ; du gras tel que du gras de lard ou de canard et un mélange quelconque de ceux-ci.

Selon un mode de réalisation préféré, les croquettes selon l'invention comprennent en outre au moins un ingrédient choisi parmi : de la farine de volaille, du blé, de la farine de blé, du maïs, de la pulpe de betterave, de la farine de gluten de maïs, du sel, du gras de lard et de l'huile de soja.

Selon un mode de réalisation, les croquettes selon l'invention comprennent en poids par rapport au poids total des croquettes :
- de 5 à 20% d'un mélange de gluten de blé vital et de protéine végétale hydrolysée, comprenant de 5% à 15%, en poids par rapport au poids total du mélange, de protéine végétale hydrolysée ;
- de 10 à 30% d'au moins une source de protéine animale ;
- de 5 à 25% de blé ;
- de 1 à 10% d'au moins un liant ;
- de 15 à 40% de maïs ;
- de 1 à 5% d'au moins une source de fibre ;
- de 1 à 10% d'au moins une source de protéine végétale ;
- de 0,1 à 5% de sel;
- de à 0,5 à 10% d'au moins une source de lipide.

Selon un mode de réalisation préféré, les croquettes selon l'invention comprennent en poids par rapport au poids total des croquettes :
- de 5 à 20% d'un mélange de gluten de blé vital et de gluten de blé hydrolysé, comprenant de 5% à 15%, en poids par rapport au poids total du mélange, de gluten de blé hydrolysé, de préférence de 5% à 10% ;
- de 10 à 30% de farine de volaille ;
- de 5 à 25% de blé ;
- de 1 à 10% de farine de blé ;
- de 15 à 40% de maïs ;
- de 1 à 5% de pulpe de betterave ;
- de 1 à 10% de farine de gluten de maïs ;
- de 0,1 à 5% de sel ;
- de 1 à 10% de gras de lard ; et
- de 0,5 à 5% d'huile de soja.

Selon un mode de réalisation, les croquettes selon l'invention possèdent une dureté comprise entre 40 N et 120 N. Dans un mode de réalisation préféré, les croquettes selon l'invention possèdent une dureté comprise entre 80 N et 100 N.

Selon un mode de réalisation, les croquettes selon l'invention possèdent une durabilité supérieure à 95%. Dans un mode de réalisation, les croquettes selon l'invention possèdent une durabilité comprise entre 95% et 99,5%. Dans un mode de réalisation préféré, les croquettes selon l'invention possèdent une durabilité comprise entre 98% et 99,5%.

Avantageusement, l'introduction d'un mélange de gluten de blé vital et de gluten de blé hydrolysé, comprenant de 5% à 15% de gluten de blé hydrolysé, de préférence de 5% à 10%, dans la composition des croquettes selon l'invention permet un meilleur contrôle de la dureté et de la durabilité du produit final.

Le contrôle de la dureté et de la durabilité est avantageux car il permet une meilleure digestibilité des croquettes selon l'invention par les animaux de compagnie mais également une préservation accrue des croquettes pendant le transport et le stockage.

Selon un mode de réalisation, les croquettes selon l'invention possèdent un taux de matière sèche compris entre 88% et 91%.

Selon un mode de réalisation, l'animal de compagnie est choisi parmi les chiens, les chats, les furets, les rongeurs tels que les rats, les cochons d'Inde, les hamsters, les chinchillas, les gerbilles, les souris ; et les lapins. Dans un mode de réalisation préféré, l'animal de compagnie est un chien. Dans un autre mode de réalisation préféré, l'animal de compagnie est un chat.

Selon un mode de réalisation, les croquettes selon l'invention sont des croquettes pour chien. Selon un autre mode de réalisation, les croquettes selon l'invention sont des croquettes pour chat.

### Procédé

L'invention concerne également un procédé de préparation de croquettes pour animaux de compagnie, comprenant les étapes suivantes :
a) broyage et/ou mélange d'au moins un des ingrédients suivant : farine de volaille, blé, farine de blé, maïs, pulpe de betterave, farine de gluten de maïs, sel ; avec un mélange de gluten de blé vital et de protéine végétale hydrolysée, ledit mélange comprenant de 1% à 20% de protéine végétale hydrolysée;
b) injection à flux contrôlé du mélange sec obtenu à l'étape a) par gravité dans un extrudeur (1^{er} fourreau)
c) injection contrôlée d'eau dans l'extrudeur (fourreau 2) jusqu'à une humidité totale comprise entre 20 et 35% dans l'extrudeur ;
d) extrusion de la pâte obtenue à l'étape c) ;
e) découpage du matériau extrudé obtenu à l'étape d) en croquettes ;
f) séchage des croquettes jusqu'à une teneur en humidité de 9 à 12% ;
g) refroidissement des croquettes jusqu'à température ambiante.

Selon un mode de réalisation, les croquettes préparées par le procédé selon l'invention sont des croquettes selon l'invention.

Selon un mode de réalisation, le mélange de gluten de blé vital et de protéine végétale hydrolysée comprend de 10% à 20% de protéine végétale hydrolysée en poids par rapport au poids total du mélange. Dans un mode de réalisation préféré, le mélange comprend de 5% à 15% de protéine végétale hydrolysée Dans un mode de réalisation plus préféré, le mélange comprend de 5% à 10% de protéine végétale hydrolysée. Dans un mode de réalisation encore plus préféré, le mélange comprend 5%, 6%, 7%, 8%, 9% ou 10% de protéine végétale hydrolysée. Dans un mode de réalisation encore plus préféré, le mélange comprend environ 5% de protéine végétale hydrolysée.

Selon un mode de réalisation, le procédé selon l'invention comprend en outre une étape d'enrobage des croquettes obtenues avec du gras de lard et de l'huile de soja.

Selon un mode de réalisation, le broyage des différents ingrédients est réalisé dans n'importe quel broyeur connu de l'homme du métier tel qu'un broyeur à aiguilles, un broyeur à cylindres, un turbo-broyeur, un broyeur à marteaux.

Selon un mode de réalisation, l'eau ajouté à l'étape c) afin de former la pâte est à une température comprise entre 10 et 25°C.

Selon un mode de réalisation, l'étape d'extrusion est réalisée à l'aide d'une installation comprenant un moule et un certain nombre de zones de mélange et de pétrissage, composées d'une pluralité d'éléments de vis de pétrissage alternativement en avant et en arrière. Dans un mode de réalisation, la température dans l'installation d'extrusion est augmentée de 50°C à l'entrée à 150°C dans la zone de pétrissage finale vers la sortie de filière. Dans un mode de réalisation, l'extrudeur est un extrudeur à double vis de type ZSK 25.

Selon un mode de réalisation, le matériau extrudé à l'étape c) est découpé en croquettes d'une longueur comprise entre 0.5 mm et 2.0 mm

Selon un mode de réalisation, l'étape de séchage des croquettes obtenues à l'étape d) est réalisée à une température de 60°C jusqu'à obtenir une teneur en humidité comprise entre 9% et 15%, de préférence comprise entre 11% et 13%, plus préférentiellement de 12%.

Selon un mode de réalisation, le taux d'expansion des croquettes selon l'invention ou obtenues par le procédé de la présente invention est augmenté par rapport à des croquettes de référence ne comprenant pas un mélange de gluten de blé vital et de gluten de blé hydrolysé, comprenant de 5% à 15% de gluten de blé hydrolysé, de préférence de 5% à 10%.

Avantageusement, l'introduction d'un mélange de gluten de blé vital et de gluten de blé hydrolysé, comprenant de 5% à 15% de gluten de blé hydrolysé, de préférence de 5% à 10%, dans la composition de croquettes selon l'invention permet une meilleure expansion du produit final.

Une meilleure expansion des croquettes est avantageuse car permet une diminution de la densité et une amélioration de l'appétence du produit final.

Selon un mode de réalisation, les croquettes sont obtenues avec un taux d'expansion compris entre 1,5 et 1,7, de préférence entre 1,6 et 1,65.

Selon un mode de réalisation, la capacité de production des croquettes selon l'invention est augmentée par rapport à des croquettes de référence ne comprenant pas un mélange de gluten de blé vital et de gluten de blé hydrolysé, comprenant de 5% à 15% de gluten de blé hydrolysé, de préférence de 5% à 10%, et pour une vitesse d'extrusion identique.

Avantageusement, l'introduction d'un mélange de gluten de blé vital et gluten de blé hydrolysé, comprenant de 5% à 15% de gluten de blé hydrolysé, de préférence de 5% à 10%, dans la composition de croquette selon l'invention permet une augmentation de la capacité de production des croquettes et donc un meilleur contrôle de l'énergie mécanique spécifique nécessaire à la mise en œuvre du procédé selon l'invention tout en conservant les qualités nutritionnelles du produit.

Selon un mode de réalisation, les croquettes selon l'invention sont obtenues avec une productivité comprise entre 15 Kg/h et 25 Kg/h. Dans un mode de réalisation préféré, les croquettes selon l'invention sont obtenues avec une productivité comprise entre 20 Kg/h et 25 Kg/h. Dans un mode de réalisation encore plus préféré, les croquettes selon l'invention sont obtenues avec une productivité comprise entre 21 Kg/h et 23 Kg/h.

### EXEMPLES

La présente invention se comprendra mieux à la lecture des exemples suivants qui illustrent non-limitativement l'invention.

### Exemple 1 : Préparation des croquettes selon l'invention

### Matériel et Méthodes

Les différents ingrédients étaient broyés à l'aide d'un moulin à marteaux, pour obtenir une poudre fine. Cette poudre est introduite dans une trémie qui permet de délivrer par gravité une quantité horaire stable de poudre dans l'extrudeur en fonctionnement, l'injection des poudres ayant lieu au premier fourreau. La poudre est alors convoyée notamment jusqu'au fourreau 2 où l'eau est injectée de manière régulée à l'aide d'une pompe et d'un régulateur. L'extrudeur est à double vis de type ZSK 25 de Coperion utilisant une configuration de vis sans fin composée d'un certain nombre d'éléments. La vitesse de rotation la vis était réglée à 130 tr/min et les six compartiments du cylindre étaient chauffés respectivement, à partir de l'entrée, à 50°C, 70°C, 90°C, 120°C et 150°C.

Les croquettes expansées ainsi obtenues ont ensuite été séchées jusqu'à un taux d'humidité d'environ 12%, avant l'étape d'enrobage.

L'enrobage avec de l'huile de soja et du gras de lard a ensuite été effectué dans un mélangeur à pales, à une température de 65°C pendant 2 minutes de mélange. Puis les croquettes enrobées ont été séché à 40°C pendant 4 heures.

### Exemple 2 : Exemples de compositions de croquette pour animaux de compagnie obtenue par le procédé de l'invention

Les croquettes sont préparées selon l'exemple 1 ci-dessus en utilisant les compositions décrites dans le tableau 1 ci-dessous.

**Tableau 1. Composition des croquettes selon l'exemple 1**

| **Ingredients %** | **Référence** | **5% Solpro** | **15% Solpro** |
|---|---|---|---|
| Farine de volaille | 21,57 | 21,57 | 21,57 |
| blé | 15,87 | 15,87 | 15,87 |
| maïs | 27,57 | 27,57 | 27,57 |
| Pulpe de betterave | 2,12 | 2,12 | 2,12 |
| Farine de blé | 5,82 | 5,82 | 5,82 |
| Farine de gluten de maïs | 6,35 | 6,35 | 6,35 |
| Gluten de blé vital | 10.58 | 10.05 | 8.99 |
| Gluten de blé hydrolysé | 0,0 | 0,53 | 1,68 |
| sel | 0,68 | 0,68 | 0,68 |
| Gras de lard | 7,62 | 7,62 | 7,62 |
| Huile de soja | 2,12 | 2,12 | 2,12 |
| | 100 | 100 | 100 |

Les croquettes obtenues possèdent les caractéristiques suivantes :

### 1. Dureté et durabilité

Les valeurs de dureté et durabilité des croquettes selon les compositions présentées dans le tableau 1 ci-dessus sont représentées dans le tableau 2 suivant :

**Tableau 2. Dureté et durabilité des croquettes selon l'exemple 1**

| | **Année de récolte du gluten de blé** | **Référence** | **5% Solpro** | **15% Solpro** |
|---|---|---|---|---|
| Dureté (N) | Année 1 | 122 | 111 | 112 |
| | Année 2 | 112 | 91 | 109 |
| Durabilité (%) | Année 1 | 98,96 | 98,96 | 99,02 |
| | Année 2 | 99,00 | 99,00 | 98,86 |

Les résultats montrent que l'incorporation de gluten de blé hydrolysé dans la composition de croquettes permet une diminution de la dureté, se rapprochant des croquettes commerciales et n'affecte pas la durabilité des croquettes quelle que soit l'année de récolte du gluten de blé.

### 2. Rapport ténacité/extensibilité (P/L) et taux d'expansion

### 2.1. Rapport ténacité/extensibilité (P/L)

Le taux d'expansion est lié aux propriétés du gluten de blé qui peuvent être différentes en fonction des récoltes. Les propriétés du gluten de blé sont caractérisées chaque année en déterminant le rapport ténacité/extensibilité (P/L) indiquant le degré d'extensibilité du gluten de blé récolté.

Un rapport < 0,5 indique un gluten de blé très extensible, alors qu'rapport > 0,5 indique un gluten de blé rigide et difficile et donc peu extensible.

Les valeurs du rapport ténacité/extensibilité (P/L) du gluten de blé seul ou en mélange avec du gluten de blé hydrolysé sont représentées dans le tableau 3 suivant :

**Tableau 3. Rapport ténacité/extensibilité (P/L) des croquettes selon l'exemple 1**

| | **Année de récolte du gluten de blé** | **0% Solpro** | **5% Solpro** | **15% Solpro** |
|---|---|---|---|---|
| P/L | Année 1 | 0,7 | 0,25 | 0,21 |
| | Année 2 | 0,42 | 0,21 | 0,3 |

Les résultats montrent que le remplacement d'une portion de gluten de blé avec une quantité limitée de gluten de blé hydrolysé permet une diminution du rapport P/L et donc une d'obtenir une meilleure extensibilité, quelle que soit l'année de récolte du gluten de blé.

### 2.2. Taux d'expansion

Les valeurs du taux d'expansion des croquettes selon les compositions présentées dans le tableau 1 ci-dessus sont représentées dans le tableau 4 suivant :

**Tableau 4. Taux d'expansion des croquettes selon l'exemple 1**

| | **Année de récolte du gluten de blé** | **Référence** | **5% Solpro** | **15% Solpro** |
|---|---|---|---|---|
| Taux d'expansion | Année 1 | 1,54 | 1,63 | 1,59 |
| | Année 2 | 1,59 | 1,64 | 1,59 |

Les résultats montrent que l'incorporation de gluten de blé hydrolysé dans la composition de croquette permet une meilleure expansion du produit final quelle que soit la récolte en gluten de blé.

### 3. Productivité

Les valeurs de productivité, pour une même vitesse d'extrusion, des croquettes selon les compositions présentées dans le tableau 1 ci-dessus sont représentées dans le tableau 5 suivant :

**Tableau 5. Rapport ténacité/extensibilité (P/L) des croquettes selon l'exemple 1**

| | **Année de récolte du gluten de blé** | **Référence** | **5% Solpro** | **15% Solpro** |
|---|---|---|---|---|
| Productivité (Kg/h) | Année 1 | 19,8 | 21,4 | 21,6 |
| | Année 2 | 20,5 | 21,7 | 22,4 |

Les résultats montrent que l'incorporation de gluten de blé hydrolysé dans la composition de croquettes permet une augmentation de la capacité de production des croquettes et donc un meilleur contrôle de l'énergie mécanique spécifique nécessaire à la mise en œuvre du procédé selon l'invention tout en conservant les qualités nutritionnelles du produit.

## Revendications

1. Croquettes possédant un taux d'expansion compris entre 1,5 et 1,7, de préférence entre 1,6 et 1,65, pour animaux mammifères de compagnie comprenant un mélange de gluten de blé vital et de gluten de blé hydrolysé, le mélange comprenant de 5% à 15%, en poids par rapport au poids total du mélange, de gluten de blé hydrolysé, de préférence de 5% à 10% et de la pulpe de betterave.

2. Croquettes selon la revendication **1,** dans lesquelles le mélange de gluten de blé vital et de gluten de blé hydrolysé représente de 5% à 20 % en poids par rapport au poids total des croquettes.

3. Croquettes selon la revendication **1** ou **2,** comprenant en outre au moins un ingrédient choisi parmi : de la farine de volaille, du blé, de la farine de blé, du maïs, de la farine de gluten de maïs, du sel, du gras de lard et de l'huile de soja.

4. Croquettes selon l'une quelconque des revendications **1** à **3,** comprenant en poids par rapport au poids total des croquettes :
- de 5 à 20% d'un mélange de gluten de blé vital et de gluten de blé hydrolysé, comprenant de 5% à 15%, en poids par rapport au poids total du mélange, de gluten de blé hydrolysé, de préférence de 5% à 10% ;
- de 10 à 30% de farine de volaille ;
- de 5 à 25% de blé ;
- de 1 à 10% de farine de blé ;
- de 15 à 40% de maïs ;
- de 1 à 5% de pulpe de betterave ;
- de 1 à 10% de farine de gluten de maïs ;
- de 0,1 à 5% de sel ;
- de 1 à 10% de gras de lard ; et
- de 0,5 à 5% d'huile de soja.

5. Croquettes selon l'une quelconque des revendications **1** à **4,** lesdites croquettes étant des croquettes pour chien ou chat.

6. Croquettes selon l'une quelconque des revendications **1** à **5,** lesdites croquettes possédant une dureté comprise entre 40 N et 120 N.

7. Croquettes selon l'une quelconque des revendications **1** à **6,** lesdites croquettes possédant un indice de durabilité compris entre 98 et 99,5.

8. Croquettes selon l'une quelconque des revendications **1** à **7,** lesdites croquettes possédant un taux de matière sèche compris entre 88% et 91%.

9. Procédé de préparation de croquettes possédant un taux d'expansion compris entre 1,5 et 1,7, de préférence entre 1,6 et 1,65, pour animaux mammifères de compagnie comprenant un mélange de gluten de blé vital et de gluten de blé hydrolysé, le mélange comprenant de 5% à 15%, en poids par rapport au poids total du mélange, de gluten de blé hydrolysé, de préférence de 5% à 10% et de la pulpe de betterave, ledit procédé comprenant les étapes suivantes :
a) broyage et/ou mélange de la pulpe de betterave avec un mélange de gluten de blé vital et de gluten de blé hydrolysé, ledit mélange comprenant de 5% à 15% de gluten de blé hydrolysé et optionnellement d'au moins un des ingrédients suivants : farine de volaille, blé, farine de blé, maïs, farine de gluten de maïs, et sel ;
b) injection à flux contrôlé du mélange sec obtenu à l'étape a) par gravité dans un extrudeur (1^{er} fourreau) ;
c) injection contrôlée d'eau dans l'extrudeur (fourreau 2) jusqu'à une humidité totale comprise entre 20 et 35% dans l'extrudeur ;
d) extrusion de la pâte obtenue à l'étape c) ;
e) découpage du matériau extrudé obtenu à l'étape d) en croquettes ;
f) séchage des croquettes jusqu'à une teneur en humidité de 9 à 12% ;
g) refroidissement des croquettes jusqu'à température ambiante.

10. Procédé selon la revendication **9,** comprenant en outre une étape d'enrobage des croquettes avec du gras de lard et de l'huile de soja.
